Europäisches Patentamt

European Patent Office

Office européen des brevets

(11) Publication number: **0 225 008**
**B1**

# EUROPEAN PATENT SPECIFICATION

(45) Date of publication of the patent specification:
**27.12.90**

(51) Int. Cl.⁵: **G01L 1/20**

(21) Application number: **86307419.1**

(22) Date of filing: **26.09.86**

(54) A miniature electro-mechanical transducer for measuring loads and displacement.

(30) Priority: **28.10.85 CA 494052**

(43) Date of publication of application:
**10.06.87 Bulletin 87/24**

(45) Publication of the grant of the patent:
**27.12.90 Bulletin 90/52**

(84) Designated Contracting States:
**CH DE GB LI SE**

(56) References cited:
**CH-A- 510 321**
**US-A- 2 752 558**

**MACHINE DESIGN, vol. 55, no. 27, 24th November 1983,
pages 87-91, Cleveland, Ohio, US; B. CARLISLE:
"Solving problems with elastomeric connectors"**

(73) Proprietor: **NORTHERN TELECOM LIMITED, 600 de la
Gauchetiere Street West, Montreal Quebec
H3B 4N7(CA)**

(72) Inventor: **Bannister, Cecil Henry, 47 Humphrey Way
Kanata, Ontario Canada, K2L 1S9(CA)**
Inventor: **Ramsden, Paul Nicholas, 308, Atlantis Avenue
Ottawa, Ontario Canada, K2A 1X6(CA)**
Inventor: **Latessa, Loretino Michele, 2639 Hickson Cr.
Ottawa, Ontaria Canada, K2H 6Y4(CA)**

(74) Representative: **Crawford, Andrew Birkby et al, A.A.
THORNTON & CO. Northumberland House 303-306 High
Holborn, London WC1V 7LE(GB)**

## Description

This invention relates to a transducer for measuring loads and displacement, and is particularly concerned with providing a very small transducer, electro-mechanical in operation, which is very simple and has a good signal output for minimum displacement. No moving contacts are necessary.

Various devices exist for measuring loads and/or displacement. Some are spring type devices which require relatively large movements. Others comprise lengths of resistor wire, usually in the form of a tight zig-zag, the resistance varying depending on stress applied to the wire. These require accurate positioning. Other devices have sliding contacts, which can cause errors in signals, and are not suitable small displacements US-A-2 752 558 describes an electric transducer comprising two electrodes separated by a flexible conductive material. The application of a force to the upper electrode, the end of which is spherically shaped, urges the two electrodes together, deforming the intermediate material and increasing the area of contact between the upper electrode and the material, hence increasing the electrical conductance of the circuit connecting the two electrodes. The increase in conductance provides a measure of the applied force.

The present invention makes use of a particular form of elastomeric material. The material consists of alternate layers of flexible dielectric and flexible conductive material. A typical example is alternate layers of a conductive ink and dielectric, one example of a conductive ink being one containing finely divided silver. The thickness of the layers can vary considerably.

In the broadest aspect, an electro-mechanical transducer comprises a body of elastomeric material, the material having a plurality of alternate layers of flexible dielectric material and flexible conductive material; two electrodes positioned on one side of the elastomeric material and an actuating member on the other side of the elastomeric material, the two electrodes spaced laterally and the layers of the elastomeric material extending generally normal to a plane between the electrodes and the actuating member. Movement of the actuating member towards the electrodes brings an increasing number of layers of conductive material into a parallel circuitry between the electrodes. The elastomeric material may be mounted on a support member, the electrodes being between the elastomeric material and the support member. Alternatively, the elastomeric material can be mounted on the actuating member. The surface contacting the layers can be curved - convex - or the elastomer material can be mounted on a curved surface.

The invention will be readily understood by the following description of certain embodiments, by way of example, in conjunction with the accompanying drawings, which are to a considerably enlarged scale, in which:-

Figure 1 is a side view of one form of transducer;
Figure 2 is a top plan view of the transducer of Figure 1;
Figure 3 is a cross-section on the line III-III of Figure 1, showing the electrodes;
Figure 4 is a cross-section, generally on the line IV-IV of Figure 2, showing an initial contact condition;
Figures 5 and 6 are cross-sections similar to that of Figure 4, showing two stages of progressive movement of an actuating member;
Figures 7, 8, and 9 are views on the bottom surface of the elastomeric material, illustrating the progressive increase in contact area on progressive movement of the actuating member;
Figure 10 is a cross-section illustrating a further embodiment;
Figure 11 is a further cross-section illustrating another embodiment;
Figure 12 is a view similar to that of Figure 1 illustrating an alternative embodiment; and
Figure 13 is a further view similar to that of Figure 1 illustrating a further alternative.

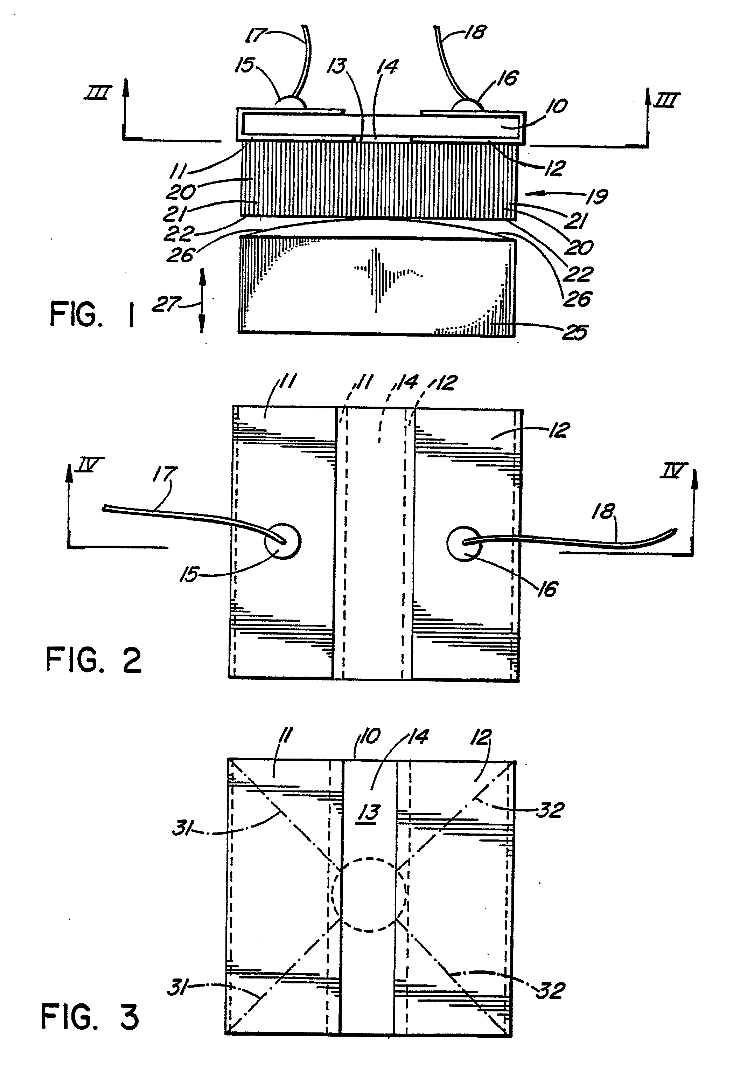

Illustrated in Figures 1, 2 and 3 is one form of transducer. A support member 10, of electrically insulating material, has two electrodes 11 and 12 formed on a support surface. The electrodes are spaced laterally, there being a small gap 14 between the electrodes. In the example, the electrodes 11 and 12 extend round the sides of the support member onto its other surface. Electrical connections are made to the electrodes at 15 and 16 via leads 17 and 18. A body of elastomeric material 19 is mounted on the support surface 13 and in contact with the electrodes 11 and 12. The elastomeric material is composed of a large number of layers comprising alternately a flexible dielectric layer and a conductive layer, indicated at 20 and 21. The layers extend generally normal to the support surface 13, the ends of the layers being exposed at a contact surface 22.

Opposed to the elastomeric material is an actuating member 25, having curved surface 26. In the example, the surface 26 is spherical. At least the surface 26 is electrically conducting. Conveniently the piston 25 is of conductive material. The actuating member moves in a direction normal to the support member, in a direction generally parallel to the layers 20, 21 as indicated at 27. An electrical input is applied via one of the leads 17 and 18, and an output taken from the other lead.

Initially, the actuating member can be positioned so that the surface 26 is not touching the elastomeric material. Alternatively it can be arranged that the surface 26 is in contact with the elastomeric material. If the diameter of contact is less than the distance of the gap 14, no output signal will be produced. If the area of contact is greater than the gap, then an initial signal will be produced. As the actuating member is moved into increasing contact with the elastomeric material, so the surface 26 moves into contact with the successively increasing number of conducting layers. Effectively, each layer acts as a resistor and increasing area of contact brings an increasing number of resistors into an electrically parallel relationship. The resistive path between input and output therefore decreases, giving an increasingly output signal. Also, in addition to the number of layers being contacted increasing, the length of contact between each layer and the surface 26 - normal to the plane of the sheet in Figure 1, also increases. The curve of the surface 26 will determine the curve of the output signal.

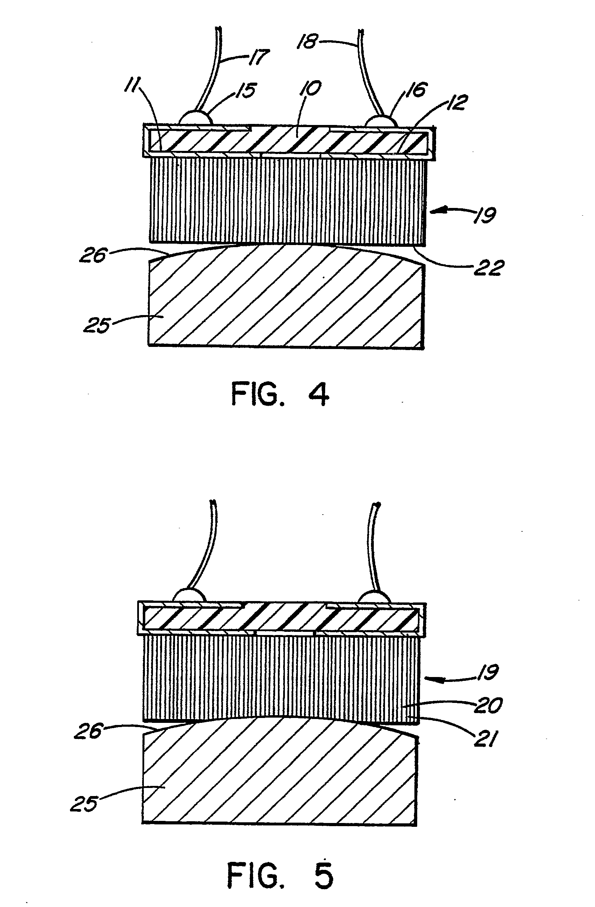

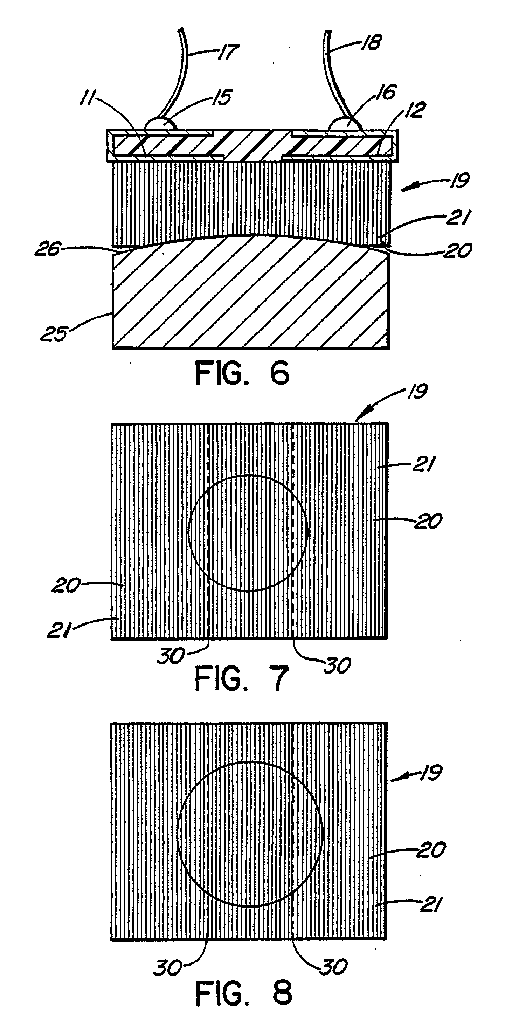

Figures 4 to 9 illustrate the initial contact between surface 26 and the elastomeric material (Figure 4), two stages of progressive movement of the actuating member towards the elastomeric material (Figures 5 and 6) and three examples of increasing contact area between surface 26 and the elastomeric material (Figures 7, 8 and 9). The contact edges of the layers 20 and 21 are seen, the increase in number of layers contacted and the increasing length of contact with the layers. The spaced opposed edges of the electrodes 11 and 12 are indicated by dotted lines 30.

The curve of the output signal can be varied by varying the shape of the electrodes 11 and 12 where they are in contact with the elastomeric material. For example, the electrodes can be of decreasing width as they approach each other, as indicated by the chain dotted lines 31 and 32 in Figure 3. Such variation of shape will modify the increase in length of contact between surface 26 and the layers 20 and 21 as the piston is moved. The shaping of the electrodes can provide for a linear output curve. The output signal can also be varied by varying the thickness of the layers 20 and 21. As an example, the total thickness of a compound layer, that is, a layer of flexible dielectric plus a layer of conductive material, can be .005 inches. This is the pitch of the layers. However, this dimension can be increased if desired.

As described above, the body of elastomeric material effectively acts as a plurality of resistors in parallel, for example, each layer 20 being a resistor. Increased contact between surface 26 and the elastomeric material increases the number of resistors in parallel. Also, the increasing length of contact with a layer effectively decreases the resistance of that layer. The output is normally connected into a bridge network, in series with a resistor of constant value, and an output signal abstracted in the normal manner from the bridge circuit. It can be arranged that the constant value resistor be part of the transducer assembly.

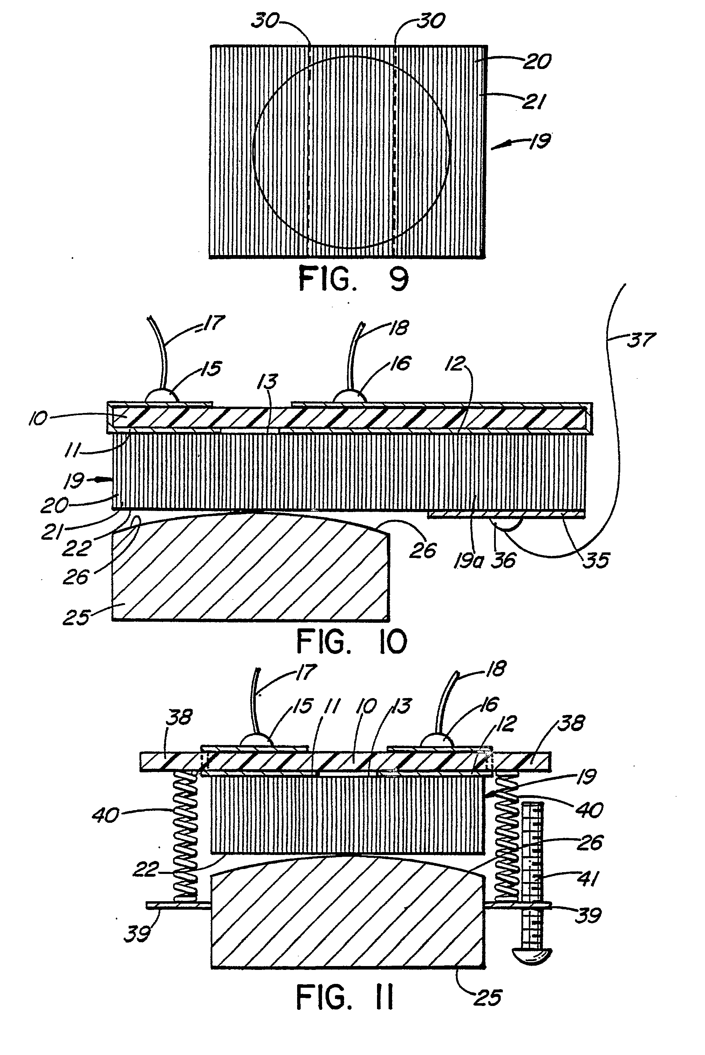

Figure 10 illustrates an arrangement providing a constant value resistor. In the example, the body of elastomeric material 19 is extended laterally, at 19a, and an additional electrode 35 is attached to the surface of the portion 19a remote from the support member 10. The electrode extends over the width of the extra portion 19a also and terminal 16 and lead 18 are the input to the device. A further contact 36 is provided on the electrode 35 and a lead 37 extends from the contact 36. The main portion of the body of elastomeric material 19, contacted by the surface 26, becomes one branch of the bridge circuit and the further portion 19a becomes another arm of the bridge circuit.

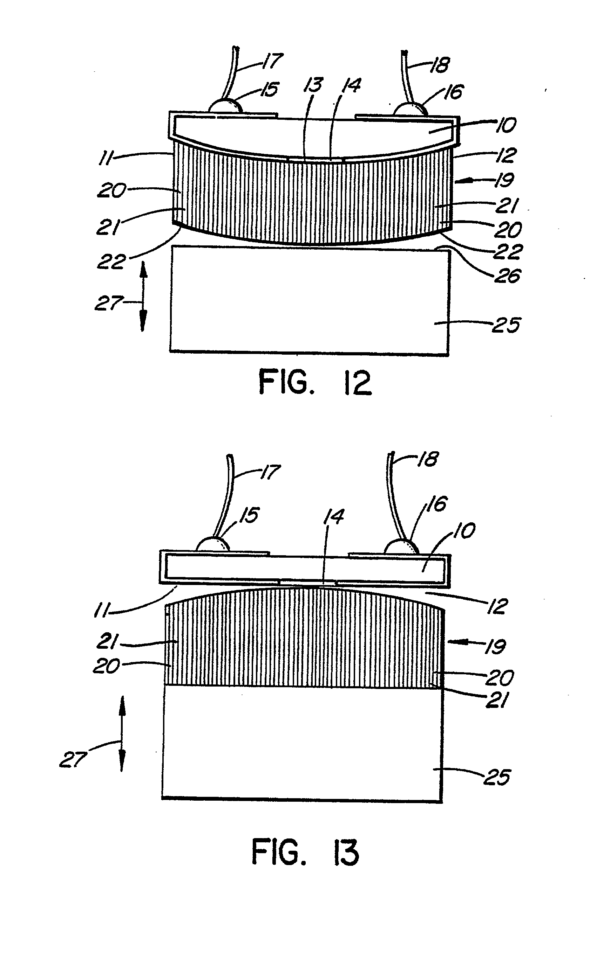

Springs can be provided, in parallel with the actuating member, to take some of the load under high load conditions. This is illustrated in Figure 11. The support member 10 is extended at each end, the extensions 38 being of reduced width relative to the main part of the support member. A projection 39 is attached on either side of the member 25 and springs 40 extend between the projections 39 and extensions 38. A limit stop can also be provided. This is shown in Figure 11, a screw 41 extending in the projection 39 and adjustable to abut against the extension 38. A fixed stop can be provided alternatively.

It will be appreciated that the electrodes 11 and 12 need not be extended round onto the other surface of the support member 10. The support member can, for example, be extended laterally and the leads attached to the electrodes on the same surface as carries the elastomeric material.

While the invention has been described and illustrated with the elastomeric material supported on a flat, stationary support member, the invention can be applied in other ways.

Thus, as illustrated in Figure 12, the support member 10 can have a curved support surface 13, for example spherical. The actuating member 25 can then have a flat surface 26. This can be a convenient arrangement for when the surface 26 is part of, or formed on, a moveable member of some apparatus. Both the support surface 13 and surface 26 can be curved.

A further alternative, illustrated in Figure 13, has the elastomeric material mounted on the moveable or actuating member. Thus surface 26 becomes the support surface and contact is made between the elastomeric material and the electrodes 11 and 12, the layers moving sequentially into contact with the electrodes. While, in this example, the elastomeric material is shown mounted on a curved surface, the surface 26 can be flat and the electrodes 11 and 12 arranged to present a curved surface to the elastomeric material.

In yet another arrangement, the contact member 25 can be a thin flexible member extending over the contact surface 21. The surface 26 can then be pushed into contact with the contact surface by pressure on the flexible member. Various other arrangements can be visualized, whereby the exposed edges of the layers of conductive material are contacted by a conducting surface or member, to sequentially vary the number of conductive layers brought into an electrically parallel relationship.

The invention provides a simple and very small transducer. Thus, for example, with a layer pitch of .005 inches, the size of a transducer can be 3 mm x 3 mm x 5 mm and can give resistance changes from about $16 \times 10^3$ ohms to less than $.44 \times 10^3$ ohms, with an actuating member displacement of about 0.4 mm. A typical elastomeric material is one sold by TECKNIT of Cranford, New Jersey, under the trademark Zebra. The device has an analogue output, requires no amplification, and has no moving contacts for obstructing the output signal. The invention has considerable use in robotics for measuring holding pressures and measuring small movements and similar features. It is also applicable in handwriting recognition devices for measuring pen pressures. In this example, the contact surface would be flexible.

The device can also be used as a switch if the initial area of contact is less than the gap 14 between electrodes.

## Claims

1. An electro-mechanical transducer characterized by a body of elastomeric material (19) composed of a plurality of alternate layers of flexible dielectric material (20) and flexible conductive material (21); two electrodes (11, 12) positioned on one side of the body of elastomeric material, the electrodes being spaced along an axis and in opposition to ends of the layers (20, 21):, the layers (20, 21) of elastomeric material (19) extending generally normal to the axis; electrical connections (17, 18) to the electrodes (11, 12), an input to one electrode and an output to the other electrode; an actuating member (25) positioned on the other side of the body of elastomeric material (19) and having an electrically conductive surface (26) aligned with the axis and in opposition to ends of the layers (20, 21); movement of the actuating member (25) towards the electrodes (11, 12) deforming the body of elastomeric material (19) and successively connecting an increased number of layers of conductive material (21) in parallel between the electrodes (11, 12) through the conductive surface (26).

2. A transducer as claimed in claim 1, characterized by support member (10), the electrodes (11, 12) and the elastomeric material (19) being mounted on a surface of the support member (10).

3. A transducer as claimed in claim 1, characterized by the elastomeric material (19) being mounted on the actuating member (25).

4. A transducer as claimed in claim 1 or 2, characterized by the elastomeric material (19) having a planar contact surface (22) extending generally normal to the direction of the layers (20, 21), the actuating member (25) having a convex arcuate surface (26) opposed to the planar contact surface (22).

5. A transducer as claimed in claim 4, characterized by the actuating member (25) having a spherical surface (26) opposed to the planar contact surface (22).

6. A transducer as claimed in claim 1 or 2, characterized by the elastomeric material (19) having a convex arcuate contact surface (22), the actuating member (25) having a planar surface (26) extending generally normal to the direction of the layers (20, 21).

7. A transducer as claimed in claim 1 or 3, characterized by the elastomeric material (19) having a convex arcuate contact surface (22), the electrodes (11, 12) extending in a plane generally normal to the direction of the alternate layers (20, 21).

8. A transducer as claimed in any one of claims 1 to 7, characterized by the electrodes (11, 12) having opposed inner ends, the electrodes being of constant width.

9. A transducer as claimed in any one of claims 1 to 7, characterized by the electrodes (11, 12) having opposed inner ends, the electrodes being of variable width.

10. A transducer as claimed in claim 9, characterized by each of the electrodes (11, 12) decreasing in width from an outer end towards the inner end.

11. A transducer as claimed in claim 1, characterized by a lateral extension (19a) of the elastomeric material (19), one of the electrodes (11, 12) being in contact with one surface of the lateral extension (19a) and a further electrode (35) in contact with another surface of the lateral extension (19a), the surfaces of the lateral extension spaced in a direction normal to the direction of the layers (20, 21), the lateral extension (19a) forming a fixed resistance member.

12. A transducer as claimed in claim 1, characterized by the electrodes (11, 12) being mounted on a support member (10), and springs (40) extending between the support member (10) and the actuating member (25).

13. A transducer as claimed in claim 1, characterized by the electrodes (11, 12) being mounted on a support member (10) and adjustable stop means (41) positioned between the support member (10) and the actuating member (25).

14. A transducer as claimed in claim 1, characterized by a support member (10) having front and back surfaces, the electrodes (11, 12) mounted on the front surface and extending over side edges of the support member (10) onto the back surface, and electrical connections (17, 18) on said electrodes at said back surface.

## Patentansprüche

1. Elektromechanischer Wandler, gekennzeichnet durch einen Körper aus elastomerem Material (19), der aus einer Vielzahl abwechselnder Schichten aus flexiblem dielektrischen Material (20) und flexiblem leitfähigen Material (21) zusammengesetzt ist; durch zwei an einer Seite des Körpers aus elastomerem Material angeordnete Elektroden (11, 12), wobei die Elektroden in Querrichtung längs einer Achse Abstand aufweisen und den Enden der Schichten (20, 21) gegenüberliegen und die Schichten (20, 21) aus elastomerem Material (19) sich allgemein senkrecht zu der Achse erstrecken; durch elektrische Anschlüsse (17, 18) zu den Elektroden (11, 12), einem Eingang zu einer Elektrode und einem Ausgang zur anderen Elektrode; durch ein Betätigungsglied (25), das an der anderen Seite des Körpers aus elastomerem Material (19) angeordnet ist und eine mit der Achse ausgerichtete elektrisch leitende Fläche (26) gegenüber den Enden der Schichten (20, 21) besitzt; wobei eine Bewegung des Betätigungsgliedes (25) zu den Elektroden (11, 12) hin den Körper aus elastomerem Material (19) verformt und nacheinander eine ansteigende Anzahl von Schichten leitenden Materials (21) parallel zwischen den Elektroden (11, 12) durch die leitende Fläche (26) verbindet.

2. Wandler nach Anspruch 1, gekennzeichnet durch ein Stützglied (10), wobei die Elektroden (11, 12) und das elastomere Material (19) an einer Fläche des Stützgliedes (10) angebracht sind.

3. Wandler nach Anspruch 1, dadurch gekennzeichnet, daß das elastomere Material (19) an dem Betätigungsglied (25) angebracht ist.

4. Wandler nach Anspruch 1 oder 2, dadurch gekennzeichnet, daß das elastomere Material (19) eine planare Kontaktfläche (22) besitzt, die sich allgemein senkrecht zur Richtung der Schichten (20, 21) erstreckt, und daß das Betätigungsglied (25) eine konvex gekrümmte Fläche (26) gegenüber der planaren Kontaktfläche (22) besitzt.

5. Wandler nach Anspruch 4, dadurch gekennzeichnet, daß das Betätigungsglied (25) eine sphärische Fläche (26) gegenüber der planaren Kontaktfläche (22) besitzt.

6. Wandler nach Anspruch 1 oder 2, dadurch gekennzeichnet, daß das elastomere Material (19) eine konvex gekrümmte Kontaktfläche (22) besitzt, und daß das Betätigungsglied (25) eine planare Fläche (26) besitzt, die sich allgemein senkrecht zur Richtung der Schichten (20, 21) erstreckt.

7. Wandler nach Anspruch 1 oder 3, dadurch gekennzeichnet, daß das elastomere Material (19) eine konvex gekrümmte Kontaktfläche (22) besitzt, und daß sich die Elektroden (11, 12) in einer allgemein zur Richtung der abwechselnden Schichten (20, 21) senkrechten Ebene erstrecken.

8. Wandler nach einem der Ansprüche 1 bis 7, dadurch gekennzeichnet, daß die Elektroden (11, 12) einander gegenüber liegende innere Enden besitzen und daß die Elektroden von konstanter Breite sind.

9. Wandler nach einem der Ansprüche 1 bis 7, dadurch gekennzeichnet, daß die Elektroden (11, 12) einander gegenüber liegende innere Enden besitzen und daß die Elektroden von variabler Breite sind.

10. Wandler nach Anspruch 9, dadurch gekennzeichnet, daß jede Elektrode (11, 12) von einem äußeren Ende zu dem inneren Ende in der Breite abnimmt.

11. Wandler nach Anspruch 1, gekennzeichnet durch eine seitliche Verlängerung (19a) des elastomeren Materials (19), wobei eine der Elektroden (11, 12) mit einer Fläche der seitlichen Verlängerung (19a) in Kontakt ist und eine weitere Elektrode (35) mit einer anderen Fläche der seitlichen Verlängerung (19a) in Kontakt ist, wobei die Flächen der seitlichen Verlängerung in einer zur Richtung der Schichten (20, 21) senkrecht stehenden Richtung Abstand haben und die seitliche Verlängerung (19a) ein Glied festen Widerstands bildet.

12. Wandler nach Anspruch 1, dadurch gekennzeichnet, daß die Elektroden (11, 12) an einem Stützglied (10) angebracht sind und daß sich Federn (40) zwischen dem Stützglied (10) und dem Betätigungsglied (25) erstrecken.

13. Wandler nach Anspruch 1, dadurch gekennzeichnet, daß die Elektroden (11, 12) an einem Stützglied angebracht sind und daß einstellbare Anschlagmittel (41) zwischen dem Stützglied (10) und dem Betätigungsglied (25) angeordnet sind.

14. Wandler nach Anspruch 1, dadurch gekennzeichnet, daß ein Stützglied (10) mit vorderen und hinteren Flächen vorgesehen ist, daß die Elektroden (11, 12) an der vorderen Fläche angebracht sind und sich über Seitenkanten des Stützgliedes (10) zur hinteren Fläche erstrecken, und daß an der hinteren Fläche elektrische Anschlüsse (17) zu den Elektroden vorgesehen sind.

## Revendications

1. Transducteur électromécanique, caractérisé en ce qu'il comprend un corps en élastomère (19) composé d'un ensemble de couches alternées de matériau flexible diélectrique (20) et de matériau flexible conducteur (21); deux électrodes (11, 12) positionnées sur un côté du corps de l'élastomère, les électrodes étant espacées latéralement le long d'un axe et faisant face aux extrémités des couches (20, 21), les couches (20, 21) d'élastomère (19) s'étendant dans une direction générale perpendiculaire à l'axe; des connexions électriques (17, 18) portées par les électrodes (11, 12) pour assurer l'arrivée du courant par une électrode et la sortie du courant par l'autre électrode; et un élément de commande (25) positionné sur l'autre côté du corps de l'élastomère (19) et ayant une surface conductrice de courant (26) alignée avec l'axe et faisant face aux extrémités de couches (20, 21); le mouvement de l'élément de commande (25) vers les électrodes (11, 12) provoquant une déformation du corps de l'élastomère (19) en mettant successivement en contact un nombre croissant de couches de matériau conducteur (21) en parallèle entre les électrodes (11, 12) par l'intermédiaire de la surface conductrice (26).

2. Transducteur selon la revendication 1, caractérisé en ce qu'il comprend un élément de support (10), les électrodes (11, 12) et l'élastomère (19) étant montés sur une surface de l'élément de support (10).

3. Transducteur selon la revendication 1, caractérisé en ce que l'élastomère (19) est monté sur l'élément de commande (25).

4. Transducteur selon la revendication 1 ou 2, caractérisé en ce que l'élastomère (19) a une surface de contact plane (22) s'étendant dans une direction générale perpendiculaire à la direction des couches (20, 21) et que l'élément de commande (25) a une surface courbe convexe (26) faisant face à la surface de contact plane (22).

5. Transducteur selon la revendication 4, caractérisé en ce que l'élément de commande (25) a une surface sphérique (26) faisant face à la surface de contact plane (22).

6. Transducteur selon la revendication 1 ou 2, caractérisé en ce que l'élastomère (19) a une surface de contact courbe convexe (22) et que l'élément de commande (25) a une surface plane (26) s'étendant dans la direction générale perpendiculaire à la direction des couches (20, 21).

7. Transducteur selon la revendication 1 ou 3, caractérisé en ce que l'élastomère (19) a une surface de contact courbe convexe (22) et que les électrodes (11, 12) s'étendent dans un plan généralement perpendiculaire à la direction des couches alternées (20, 21).

8. Transducteur selon l'une quelconque des revendications 1 à 7, caractérisé en ce que les électrodes (11, 12) ont des extrémités internes opposées et que les électrodes ont une largeur constante.

9. Transducteur selon l'une quelconque des revendications 1 à 7, caractérisé en ce que les électrodes (11, 12) ont des extrémités internes opposées et que les électrodes ont une largeur variable.

10. Transducteur selon la revendication 9, caractérisé en ce que chacune des électrodes (11, 12) diminue en largeur depuis l'extrémité externe jusqu'à l'extrémité interne.

11. Transducteur selon la revendication 1, caractérisé en ce qu'il comporte un prolongement latéral (19a) de l'élastomère (19), qu'une des électrodes (11, 12) est en contact avec une surface du prolongement latéral (19a), qu'une électrode supplémentaire (35) est en contact avec une autre surface du prolongement latéral (19a), que les surfaces du prolongement latéral sont espacées dans une direction perpendiculaire à la direction des couches (20, 21) et que le prolongement latéral (19a) constitue un élément à résistance fixe.

12. Transducteur selon la revendication 1, caractérisé en ce que les électrodes (11, 12) sont montées sur un élément de support (10) et que des ressorts (40) s'étendent entre l'éléments de support (10) et l'élément de commande (25).

13. Transducteur selon la revendication 1, caractérisé en ce que les électrodes (11, 12) sont montées sur un élément de support (10) et que des moyens ajustables de butée (41) sont positionnés entre l'élément de support (10) et l'élément de commande (25).

14. Transducteur selon la revendication 1, caractérisé en ce que l'élément de support (10) a une surface avant et une surface arrière, que les électrodes (11, 12) sont montées sur la surface avant et s'étendent par les bords latéraux de l'élément de support (10) sur la surface arrière et que des connexions électriques (17, 18) sont prévues sur lesdites électrodes au niveau de ladite surface arrière.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13